# EUROPEAN PATENT APPLICATION

(11) **EP 4 797 126 A1**
(43) Date of publication of application: **26.08.2026**
(21) Application number: 25159895.9
(22) Date of filing: 25.02.2025
(51) Int. Cl.: G06F 17/18

(54) **METHOD FOR REDUCING NOISE IN HYPER- AND MULTI-SPECTRAL DATA**

(71) Applicant: Universität Innsbruck, 6020 Innsbruck (AT); Katholieke Universiteit Leuven, 3000 Leuven (BE)
(72) Inventor: Ramisch, Arne, 6020 Innsbruck (AT); Weltje, Gert Jan, 3000 Leuven (BE)
(74) Representative: Schwarz & Partner Patentanwälte GmbH

(57) **Abstract**

The invention relates to A computer-implemented method for reducing noise in spectral data, comprising the steps: receiving data by a receiver having a plurality of measurement bins, wherein the data is obtained from a sensor, wherein the data comprises an integer number of detected particles for each measurement bin and for each consecutive measurement, and storing said data in a matrix; mapping the number of detected particles stored in said matrix from the count space to a real space in which measurement errors are independent and identically distributed; performing a regularized singular value decomposition of said matrix.

## Description

The present invention relates to a computer-implemented method for reducing noise in hyper- and multi-spectral data, as well as a data-processing device comprising means for carrying out the method, a computer program, and a computer-readable storage medium comprising instructions which, when executed by a computer, cause the computer to carry out the method.

The invention applies to hyper- and multi-spectral scanning (typically, 1-D or 2-D), wherein the data are collected in the form of photon counts within each of the channels (bins). The lower detection limit is equal to 1. The invention has been extensively tested with XRF spectroscopy (wavelengths of 10⁻⁸ to 10⁻¹² m) and is applicable to any form of hyper- or multi-spectral imaging where the number of recorded particles has no upper bound and is linearly proportional to measurement time.

X-ray fluorescence (XRF) spectroscopy is a powerful analytical technique widely employed for elemental analysis in various fields, including chemistry, geology, archaeology, and materials science. XRF relies on the principle of measuring the characteristic X-rays emitted by a sample when exposed to high-energy X-rays. These emitted X-rays are indicative of the elemental composition of the sample, allowing for the identification and quantification of elements present. In an XRF measurement, the emitted X-rays form a spectrum, known as the XRF spectrum. This spectrum comprises discrete numbers of photons or electrons collected in a set of mutually exclusive (contiguous) bins or channels over the course of a time interval. The sensor that records the rate of arrival in each bin (i.e., the intensity) covers a specific part of the X-ray spectrum. In energy-dispersive XRF, usually in intervals of around 0.02 keV width, depending on the resolution of the sensor and the width of the spectrum. Peaks at specific energy levels within this spectrum serve as markers for identifying chemical elements within the sample. This identification process involves a comparison between measured peak locations with theoretical emission lines associated with the atomic structure of elements, which are usually referred to as fluorescence lines.

However, all hyperspectral data are characterized by inherent noise sources, particularly Poissonian noise, commonly referred to as shot noise. The origin of shot noise lies in the statistical nature of the quantum mechanical processes governing both photon emission and detection. This stochastic nature gives rise to unpredictable arrival times of photons at the sensor, introducing discrete packages of information with inherent random fluctuations into the spectrum. Broadly speaking, the level of multiplicative uncertainty scales with the square root of *n,* where *n* represents the number of photons or electrons arriving at a specific channel during the measurement interval. In other words, *n* (usually expressed as "counts") represents the expectation value of the Poisson distribution of the corresponding channel. At high intensities (large *n*), XRF spectra are indistinguishable from continuous data, and their relative uncertainty is very small. Conversely, at lower intensities (small *n*), the discrete nature of counts comes to the fore, and the relative uncertainty amplifies significantly, reaching a point where it overwhelms and obscures the signal. At *n =* 1, the "absolute uncertainty" aligns with the count of photons or electrons, and according to conventional wisdom, the uncertainty tends to infinity at *n* = 0. Consequently, shot noise emerges in settings characterized by low intensity measurements (short exposure times) or in channels linked to elements present in low abundance.

It is commonly believed that shot noise is an intrinsic part of nature and there are only two strategies to mitigate its effect across the electromagnetic spectrum: First, prolonging measurement duration and second, enhancing the efficiency of sensors through engineering advancements. However, extending the measurement duration comes at a cost, introducing challenges in terms of time, energy consumption, and applicability. This poses a critical bottleneck, particularly for high-throughput measurement devices like the XRF-Core Scanner, 2D XRF mapping devices or hyperspectral imaging systems. These devices routinely produce an extensive number of spectra, ranging from tens of thousands (line scans) to millions (imaging techniques) for a single sample. Each additional second allocated to a measurement translates into several hours to weeks of supplementary measurement time. While engineering solutions, including optimized detector designs, pulse pileup correction algorithms, and the use of filters [An2021] have been explored to mitigate the impact of shot noise, progress in these solutions has not yet reached a desirable level for low-intensity environments.

Signal processing techniques for hyperspectral applications across the electromagnetic spectrum can be broadly classified into two categories. The first category comprises models that are fully determined by physical principles, where measurements are used to inform prior assumptions. These models rely on fundamental assumptions about the physical processes [Lu2022, Zhang2020] and statistical distributions [Matsuyama2023] relevant to the specific spectral region, such as X-ray fluorescence (XRF) or infrared spectroscopy. While these methods can be highly accurate within a suitably constrained laboratory environment, they are limited by the need for detailed prior knowledge and may not adapt well to unexpected conditions or phenomena experienced by real-time in-situ measurement systems. The second category involves black-box modeling techniques, such as those employing artificial intelligence (AI) and machine learning (ML). Such pattern-recognition methods are free from physical assumptions and rely solely on the data for model training and inference. Although AI and ML can be powerful tools for signal processing and noise reduction, they come with significant downsides. These techniques are often hard to interpret physically, making it difficult to trace the noise removal process back to underlying physical principles. Additionally, their performance is highly dependent on the quality and representativeness of the training datasets. When applied to data outside the scope of their training (extrapolation), the reliability and accuracy of these models is questionable.

Due to the inherent constraints imposed by the presence of shot noise, the evaluation of raw hyperspectral data does not permit extraction of information regarding the presence and abundance of elements or phases whose concentrations are low. At low intensities, any signal (e.g. element peak) becomes indistinguishable from shot noise. Consequently, noise from the raw spectra carries over to the evaluated quantities, particularly for elements with low atomic numbers (corresponding to low energy transitions), elements or phases present in low concentrations, or in general during instances of low exposure times.

The objective of the invention is to provide a method for reducing noise in hyper- and multi-spectral data while retaining short measurement durations and employing standard efficiency sensors.

The objective is achieved by providing a method as defined in claim 1. Preferred embodiments of the invention are defined in the dependent claims, the description, and the drawings.

According to the invention, a computer-implemented method for reducing noise in spectral data is provided, the method comprising the steps:
S1) receiving data by a receiver having a plurality of measurement bins, wherein the data is obtained from a sensor, wherein the data comprises an integer number of detected particles for each measurement bin and for each consecutive measurement, and storing said data in a matrix,
S2) mapping the number of detected particles stored in said matrix from the count space to a real space in which measurement errors are independent and identically distributed,
S3) performing a regularized singular value decomposition of said matrix.

As used herein, spectral data refers to the detailed information obtained from the analysis of the spectrum of emitted radiation resulting from the interaction between a sample and an external energy source, e.g. X-rays. This spectrum is typically a graphical representation of the intensity of emitted photons as a function of their energy or wavelength. The spectral data primarily comprise peaks corresponding to specific energy levels, which are characteristic of the elements present in the sample. These peaks arise due to the electronic transitions in atoms when inner-shell electrons are ejected by the incident X-rays, and outer-shell electrons fill the resulting vacancies, emitting photons with distinct energies in the process. The position of these peaks, determined by the photon energy, allows for the qualitative identification of elements, while their intensity correlates with the relative abundance or concentration of those elements in the sample.

In a first step S1 of the method according to the invention, a receiver having a plurality of measurement bins receives data. This data is spectral data obtained from a sensor and comprises an integer number of detected particles, e.g. photons, for each measurement bin and for each consecutive measurement. This data is then stored in a matrix, which is herein denoted by N. One example of how the spectral data can be stored is as follows: rows can correspond to sample locations and their respective measurements, and columns can correspond to registered photon counts in a measurement bin. In another example, each element of the matrix represents the count of particles detected in a specific measurement bin during a specific measurement.

In a second step S2 of the method according to the invention, the number of detected particles stored in said matrix is mapped from the count space to a real space in which measurement errors are independent and identically distributed (i.i.d.). In other words, the measurement errors are distributed such that the error associated with each bin follows a standard normal distribution. Conventional spectrum analysis is typically conducted directly on raw count data. However, removing noise from spectroscopic data proves to be highly challenging, if not practically impossible, within the native count space. This difficulty arises due to the multiplicative nature of the uncertainty function, resulting in asymmetry. In addition, the uncertainty is heteroscedastic, i.e., strongly dependent on the expected value in each channel. Consequently, non-linearities in the covariance structure emerge, causing noise and signal to become non-orthogonal (i.e., dependent on each other). Moreover, traditional spectrum analysis implicitly adopts an additive error model (wherein data = signal ± noise), that fails to account for inherent constraints in the data, particularly the requirement for all spectroscopic data involving photon counting to be strictly positive. Consequently, attempting to eliminate noise by any operation involving subtraction in the count space will result in physical impossibilities, such as negative counts received at a channel.

As described in the introduction, shot noise can be modelled by a Poisson distribution. The Poisson distribution has the characteristic that its mean and variance are equal, which implies that the errors are heteroscedastic, that is, their variance depends on the magnitude of the measured counts. This dependence complicates statistical analysis and modeling, particularly when standard techniques assume errors that are additive, i.i.d. and homoscedastic (i.e., having constant variance).

To address this, a mathematical transformation is applied to the count data to approximate a space where the errors are better aligned with the desired properties of independence and identical distribution. For example, a square root transformation is a commonly used method, as it can stabilize the variance of Poisson-distributed data, making the errors approximately homoscedastic and more closely resembling a Gaussian distribution for moderate to large counts. Other transformations, such as the Anscombe or Freeman-Tukey transforms, are similarly designed to achieve this stabilization. None of these methods complies with the underlying physics. A more elaborate transformation from the count space to a real space in which measurement errors are additive, independent and identically distributed will be described in more detail below.

By transforming the data into such a "real space," statistical models and inference methods that rely on assumptions of i.i.d. errors, such as linear regression or least squares fitting, become applicable and yield reliable results. This process facilitates the interpretation and further analysis of the data while mitigating the complexities introduced by the original error structure in the count space.

In a third step S3 of the method according to the invention, a regularized singular value decomposition of said matrix N is performed after additive column-wise centering of said matrix. Regularized singular value decomposition (SVD) is an extension of the standard SVD method that incorporates regularization techniques to enhance the stability and interpretability of the decomposition. Standard SVD decomposes a matrix into a product of three components: a set of orthogonal left singular vectors, a diagonal matrix of singular values, and a set of orthogonal right singular vectors. The singular vectors represent the underlying features or patterns captured by the data.

In step S3, performing a regularized singular value decomposition of said matrix and additive column-wise centering of said matrix are performed in real space.

In cases where the data matrix contains noise or other forms of error, singular vectors associated with small singular values are dominated by noise and do not contribute significantly to structure in the data. Regularized SVD addresses this issue by identifying and selectively removing or diminishing the influence of such singular vectors. This is achieved by applying a regularization criterion, which modifies the decomposition to prioritize stability and reduce sensitivity to noise. The regularization process typically involves a thresholding or penalization mechanism. For example, singular values below a certain threshold may be set to zero (i.e., a form of truncation), or a penalty function may be applied that reduces the magnitude of smaller singular values. These adjustments effectively filter out the noise-dominated components of the data while preserving the dominant structures associated with larger singular values.

The method for removing noise in spectral data offers several advantages. First and foremost, after performing the steps of the method according to the invention, the resulting spectral data shows a significant reduction in the apparent presence of noise in the data, particularly in low-intensity channels. At the same time, peaks in the data (e.g. fluorescence lines) remain centered at their respective value and the contrast between high-intensity peaks and low-intensity peaks is preserved.

The method according to the invention further offers improved precision across the entire spectrum of channels. This improved precision will be discussed in more detail below with reference to the figures.

Another advantage of the method according to the invention is a reduction in necessary exposure time. Reduced exposure times significantly enhance throughput, allowing for the rapid analysis of a greater number of samples in less time, which is particularly advantageous in high-demand industrial and research settings. Furthermore, it reduces the risk of radiation damage to sensitive samples, when using a method like XRF. Additionally, energy consumption and operational costs are reduced. The method allows for reduction of measurement times by several orders of magnitude without loss of data quality.

The method also vastly reduces the storage demand, as the regularized SVD of 2-D XRF scanning data typically comprises less than 1% of the volume of raw spectral data.

In a preferred embodiment, the method further comprises the step of reprojecting said matrix back from real space to count space. This inverse transformation offers the advantage of obtaining the noise-filtered data in a conventional format. In XRF, this corresponds to logs of intensities as a function of energy or wavelength.

In a preferred embodiment, step S2 comprises a step of imputation for matrix entries where no particle has been detected. As used herein, imputation refers to the process of replacing missing or incomplete data in a dataset with substituted values, with the goal of preserving the overall structure, patterns, and statistical properties of the data. The underlying concept of imputation is to estimate plausible values for the missing entries based on the available information.

Especially in the case of hyperspectral data, each pixel of a measurement consists of an energy or wavelength spectrum subdivided into a large number of channels, typically in the order of thousands. Owing to the short exposure time, many of the channels in the spectrum will contain zeros. This missing data can compromise the integrity of a dataset, as many analytical and statistical methods require complete cases for computation. Imputation fills these gaps, allowing the entire dataset to be utilized rather than discarding incomplete records, which could result in a significant loss of information. Furthermore, such missing data can introduce bias if the absence is not random (as mentioned above, the large number of zeros is usually due to short exposure times). Imputation helps mitigate this bias by replacing missing values with estimates that maintain the relationships and distributions in the dataset.

Particularly preferably, the imputation is performed for each measurement bin separately by calculating replacement values based on an expectation value of a Poisson distribution whose parameter λ corresponds to the proportion of zeros recorded in said measurement bin.

In a preferred embodiment, step S2 comprises a step of removing skewness and heteroscedasticity of the error distributions from the data stored in the matrix. By removing skewness and heteroscedasticity, analytical methods based on the principle of ordinary least squares (OLS) become available, as the data closely adheres to the assumptions of OLS.

In a preferred embodiment, in step S3, performing the regularized singular value decomposition comprises the step of choosing at least one singular value from said matrix by means of an autocovariance test, and eliminating the at least one singular value from said matrix. The use of an autocovariance test to identify and remove singular values introduces a systematic and reproducible approach to data processing. By applying consistent criteria for the autocovariance test, the method ensures that the selection and removal of singular values are governed by predefined, objective thresholds, thereby minimizing subjectivity in the process. This consistency not only facilitates reliable repetition of the method across multiple applications or datasets but also enhances the robustness of the results. When the same criteria are maintained, any variability in outcomes can be attributed to inherent differences in the data rather than inconsistencies in the analytical procedure.

Particularly preferably, the autocovariance test examines singular vectors of the matrix and chooses at least one singular vector, wherein the at least one chosen singular vector corresponds to an autocovariance value that is greater than a threshold value.

In a preferred embodiment, the spectral data comprises continuous and contiguous measurements of the electromagnetic spectrum. As used herein, continuous and contiguous measurements of the electromagnetic spectrum refer to different approaches in capturing data across a range of wavelengths, frequencies, or energy bins. Hyperspectral measurements describe data acquisition in which all bins within a given range are contiguous, producing a dataset with no gaps. This type of measurement is characterized by high resolution and provides detailed spectral information, allowing for precise identification and analysis of spectral features. Multispectral measurements, in contrast, refer to the capture of data at energy, frequency or wavelength intervals that are discrete, but closely spaced across the spectrum, forming a near-complete representation of the spectral range but with small, (ir)regular gaps. While these measurements may not include every wavelength or frequency, the intervals are sufficiently close to approximate the overall spectrum and preserve key spectral characteristics.

In a further aspect of the present invention, a data processing device comprising means for carrying out the method according to the invention is provided. Furthermore, a computer program comprising instructions which, when executed by a computer, cause the computer to carry out the method according to the invention as well as a computer-readable storage medium comprising instructions which, when executed by a computer, cause the computer to carry out the method according to the invention is hereby provided.

The present invention will now be described by way of illustrative examples with reference to the accompanying drawings, in which:
- Fig. 1: shows a flowchart of the method according to the invention.
- Fig. 2: shows a comparison between theoretical error models and an observed error in experiments.
- Fig. 3: shows a comparison of selected element peaks in an XRF spectrum from conventional measurements with 1- and 100-second exposure times, and a spectrum obtained by the method according to the invention with a 1-second exposure time.
- Fig. 4: shows results from precision benchmarks of XRF line scans.
- Figs. 5a, 5b: show an effect of exposure time on precision by comparing conventional methods to the method according to the invention.

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Processes, elements, and techniques not considered necessary to those having ordinary skill in the art for a complete understanding of the aspects and features of the present invention may not be described. In the drawings, the relative sizes of elements, layers, and regions may be exaggerated for clarity. The below-described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

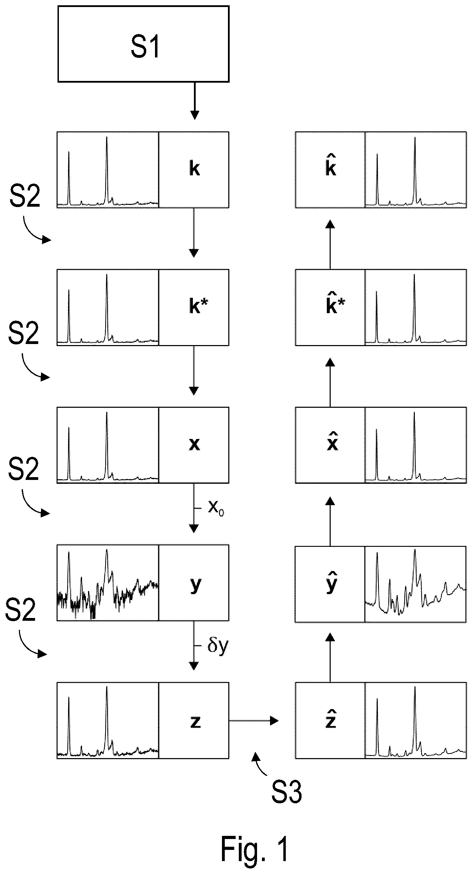

Fig. 1 shows a flowchart of the method according to the invention. In the following paragraphs and with repeated reference to Fig. 1, an exemplary embodiment of carrying out the method for reducing noise in spectral data according to the invention will be presented.

In the context of the embodiment shown in Fig. 1, the spectral data refers to a measurement using x-ray fluorescence analysis (XRF). XRF is a non-destructive technique used for elemental composition analysis of material. The procedure begins with the irradiation of a sample, such as a rock, using a primary X-ray source. This source is typically generated by an X-ray tube, which emits high-energy photons capable of exciting atoms in the sample. When the sample is exposed to the primary X-rays, its constituent atoms absorb the energy, leading to the ejection of inner-shell electrons. This results in a state of electron vacancy that is subsequently filled by electrons from higher energy levels. The transition of electrons between energy levels releases secondary (or fluorescent) X-rays, whose energies are characteristic of the specific elements present in the material. The emitted fluorescent X-rays are detected and measured using energy-dispersive or wavelength-dispersive detectors, herein referred to as "sensor".

In a first step S1 of the method according to the invention, the sensor obtains data and a receiver having a plurality of measurement bins receives this data. The data comprises an integer number of detected particles, in this case photons, for each measurement bin and for each consecutive measurement. The number of detected photons will be referred to as *k* and is stored in a matrix.

In a second step S2 of the method according to the invention, number of detected particles stored in said matrix is mapped from the count space to a real space in which measurement errors are independent and identically distributed (i.i.d.). In the embodiment shown in Fig. 1, this is done in four steps, as indicated by a change in the respective variable (from *k* to *z*)*.*

Noise in XRF spectral data (shot noise) follows a discrete Poisson distribution. The discrete Poisson distribution may be expressed in terms of a continuous distribution (the regularized lower incomplete Gamma function). This distribution is however truncated at its lower tail, because the smallest possible value of its argument, corresponding to *k* = 0, equals 1. The lower tail of the regularized lower incomplete Gamma distribution actually extends to *k* = -1, which is not physically meaningful, because negative values of *k* (i.e., negative counts of photons) cannot exist. An additive scale transformation that alleviates the problem associated with the physical interpretation of *k* is given in equation (1), $k * = k + 1 ,$ wherein a second scale transformation takes the discrete variable *k** into the positive real space, as shown in equations (2.1) and (2.2), $x = {x}_{0} for k * = 1 ,$ $x = real \left(k*\right) for k * > 1 .$

In equation (2.2), "real" indicates that x is a real number (as opposed to the integer value k*) and *x*₀ indicates a missing value where no photon has been detected. In the context of counting experiments, recording a zero merely indicates a failure to record anything. This failure reflects the limitations posed by the experimental setup, such as maximum sample size and measurement interval, as well as the finite sensitivity of a measurement device. Hence, the failure to record anything does not permit to draw the conclusion that there is nothing to record, and assignment of the number 0 to such realizations is unjustified. A more sensible way to interpret zeros in count data can be to consider them as labels that point to the existence of a lower detection limit intrinsic to the experimental setup (having a finite sensitivity and a finite measurement time). In this embodiment, values of *k* = 0 will thus be replaced by *x*₀, which is a concept known as imputation.

The value of *x*₀ is chosen such that it corresponds to the expectation of missing values of a Gamma distribution *G*(*x*;λ) with scale parameter λ, derived from the proportion of zeros in the bin under consideration. Specifically, *x*₀ corresponds to the expectation on the interval 0 *< x* < 3/2. The upper limit of this interval (3/2) refers to the lower limit of nonzero data in the raw spectrum.

The next transformation is given by equation (3), $y = ln \left(x\right) ,$ wherein values of *y* are now unconstrained, i.e. can take on negative values (as opposed to *x,* which is strictly positive). Furthermore, the uncertainty function of y is additive and symmetrical, as the logarithm of a product equals a sum of logarithms. This is important because of the multiplicative nature of the uncertainty function, otherwise resulting in asymmetry and strong dependence on the expected value in each channel. Without a transformation similar to the one in equation (3), non-linearities in the covariance structure emerge, causing noise and signal to become non-orthogonal (i.e., dependent on each other).

The fourth scale transformation is a linear transformation that brings the data within reach of conventional analytical methods based on the principle of Ordinary Least Squares (OLS), as shown in equation (4), $z = y / δy ,$ wherein the scale transformation from y to z removes heteroscedasticity, because each value of z has the same uncertainty: *δz* = 1. The error associated with *y* is expressed as a function of x, and derived by means of error propagation, taking into account the mapping of λ onto x. The random nature of the Poisson distribution implies that the errors are independent, and may be summarized by a univariate distribution. Hence, the default error model of *z* is a standard normal distribution.

This concludes the transformations of mapping the number of detected particles from the count space to a real space in which measurement errors are independent and identically distributed. The transformations of Fig. 1 as detailed above are merely one way of carrying out the invention as laid out in the appended claims.

In a third step S3, a regularized singular value decomposition (SVD) is performed on the matrix containing the values of z, yielding values *ẑ*. In the regularized SVD, at least one singular value is chosen from said matrix by means of an autocovariance test, and subsequently eliminated. The autocovariance test examines singular vectors of the matrix and retains at least one singular vector, wherein this at least one retained singular vector corresponds to an autocovariance value that is greater than a threshold value. The remaining transformations shown in Fig. 1, starting from ẑ and going back to *k̂*, are straightforward in light of the present disclosure and can be carried out by a person skilled in the art.

As a result of the regularized SVD, noise has been reduced in the spectral data while at the same time, peaks in the data (e.g. fluorescence lines) remain centered at their respective value and the contrast between high-intensity peaks and low-intensity peaks is preserved.

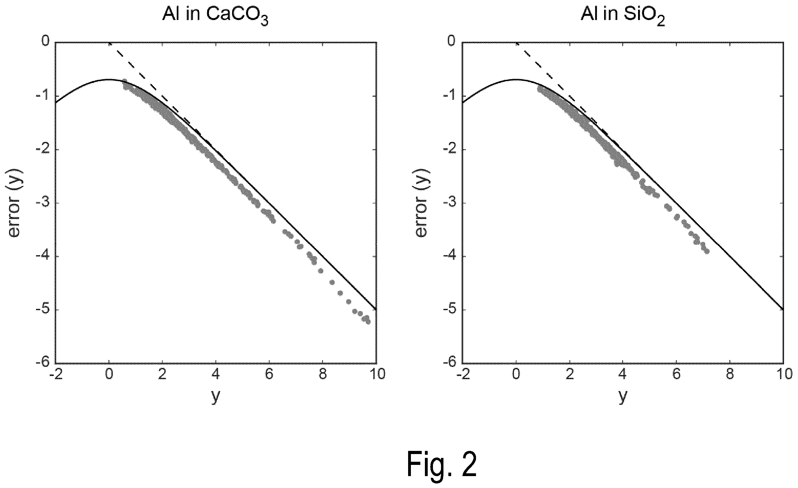

Fig. 2 shows a comparison between theoretical error models and an observed error in experiments. The dashed line indicates a Poissonian error model, the solid line indicates the DSF error model and the dots indicate experimental data.

Two examples are shown for experiments with Aluminum (more precisely: Al₂O₃) in a calcium carbonate matrix (CaCO₃; left) and quartz sand (SiO₂; right). In both cases, the observed error closely follows the DSF error model described above.

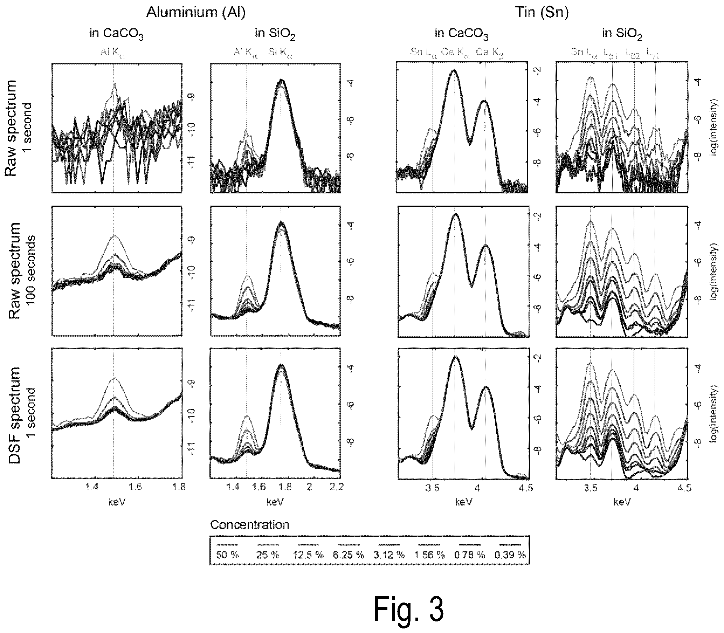

Fig. 3 shows a comparison of selected element peaks in an XRF spectrum from conventional measurements with 1- and 100-second exposure times, and a spectrum obtained by the method according to the invention with a 1-second exposure time.

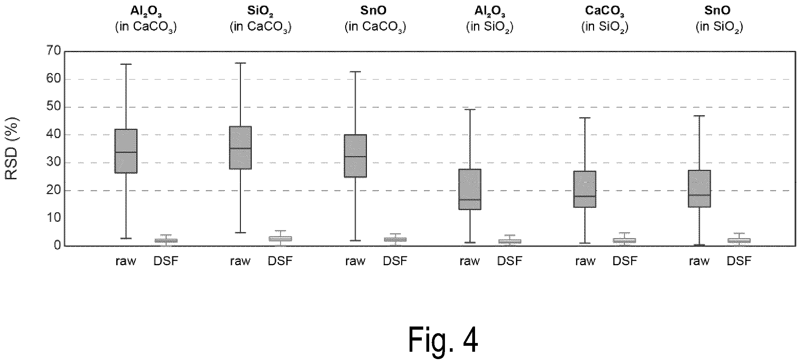

Fig. 4 shows results from precision benchmarks of XRF line scans. Box plots labelled "raw" represent the relative standard deviation (RSD) between replicates for conventional XRF measurements, while box plots labelled "DSF" correspond to the DSF routine following the method according to the invention.

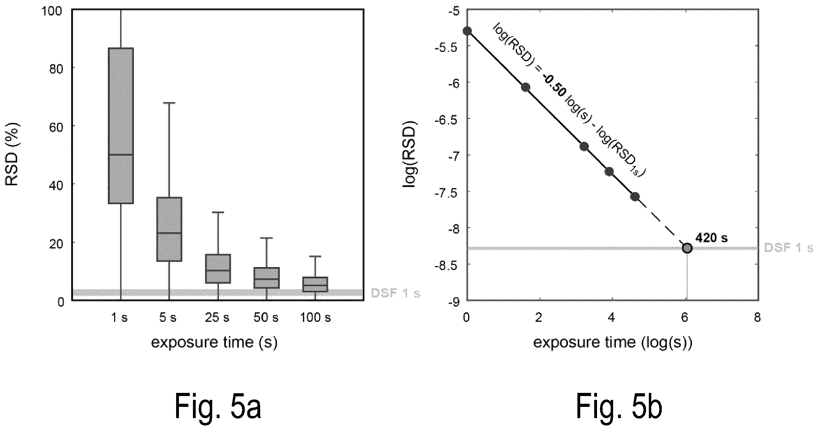

Fig. 5a and Fig. 5b show an effect of exposure time on precision by comparing conventional methods to the method according to the invention. Fig. 6a shows a comparison of precision (i.e., relative standard deviation, RSD) for conventional measurements as illustrated by box plots as a function of exposure time (in seconds) for Al₂O₃ in CaCO₃ test series. The horizontal bar labelled "DSF 1 s" shows the precision of a DSF measurement with a one-second exposure time.

Fig. 5b depicts a log-log plot of Fig. 5a, showing the relationship between exposure time and RSD. The measured values (dots) align along a straight line, allowing to extrapolate the exposure equivalent for a 1-second DSF measurement. In the illustrated example, the extrapolated line meets the "DSF 1 s" line at around log(s) = 6, from which an exposure time of around exp(log(s)) = 420 s can be calculated.

It can be seen that various features are grouped together in a single embodiment for the purpose of streamlining the disclosure of the invention. This method of disclosure is not to be interpreted as reflecting an intention that the claimed embodiments require more features than are expressly recited in each claim. Rather, as the claims reflect, the inventive subject matter lies in less than all features of a single disclosed embodiment.

### References

[An2021] An, S., Reza, S., Norlin, B., Fröjdh, C., & Thungström, G. (2021). Signal-to-noise ratio optimization in X-ray fluorescence spectrometry for chromium contamination analysis. Talanta, 230, 122236.
[Lu2022] Lu, X., Zeng, X., & Li, F. (2022). The Application of Variational Mode Decomposition to Spectral Background Removal. In 2022 IEEE 17th International Conference on Control & Automation (ICCA) (pp. 504-509). IEEE.
[Matsuyama2023] Matsuyama, T., Nakae, M., Murakami, M., Yoshida, Y., Machida, M., & Tsuji, K. (2023). Spectrum prediction in X-ray fluorescence analysis using Bayesian estimation. Spectrochimica Acta Part B: Atomic Spectroscopy, 199, 106593.
[Zhang2020] Zhang, Z., He, X., Cheng, H., & Li, F. (2020, October). Background Deduction Approach Based on Iterative Adaptive Window-Based Wavelet Transform and
Gaussian Convolution Filtering for XRF. In *2020 2nd International Conference on Artificial Intelligence and Advanced Manufacture (AIAM)* (pp. 243-247). IEEE.

## Claims

1. A computer-implemented method for reducing noise in spectral data, comprising the steps:
S1) receiving data by a receiver having a plurality of measurement bins, wherein the data is obtained from a sensor, wherein the data comprises an integer number of detected particles for each measurement bin and for each consecutive measurement, and storing said data in a matrix,
S2) mapping the number of detected particles stored in said matrix from the count space to a real space in which measurement errors are independent and identically distributed,
S3) performing a regularized singular value decomposition of said matrix after additive column-wise centering of said matrix.

2. The method according to claim 1, wherein the method further comprises the step of reprojecting said matrix back from real space to count space.

3. The method according to claim 1 or 2, wherein step S2 comprises a step of imputation for matrix entries where no particle has been detected.

4. The method according to claim 3, wherein the imputation is performed for each measurement bin separately by calculating replacement values based on an expectation value of a Poisson distribution whose parameter λ corresponds to the proportion of zeros recorded in said measurement bin.

5. The method according to any one of claims 1 to 4, wherein step S2 comprises a step of removing skewness and heteroscedasticity of the error distributions from the data stored in the matrix.

6. The method according to any one of claims 1 to 5, wherein in step S3, performing the regularized singular value decomposition of said matrix after additive column-wise centering of said matrix comprises the step of choosing at least one singular value from said matrix by means of an autocovariance test, and eliminating the at least one singular value from said matrix.

7. The method according to claim 6, wherein the autocovariance test examines singular vectors of the matrix and chooses at least one singular vector, wherein the at least one chosen singular vector corresponds to an autocovariance value that is greater than a threshold value.

8. The method according to any one of claims 1 to 7, wherein the spectral data comprises continuous and contiguous measurements of the electromagnetic spectrum.

9. A data processing device comprising means for carrying out the method of any one of the preceding claims.

10. A computer program comprising instructions which, when executed by a computer, cause the computer to carry out the method of any one of claims 1 to 8.

11. A computer-readable storage medium comprising instructions which, when executed by a computer, cause the computer to carry out the method of any one of claims 1 to 8.
